# EUROPEAN PATENT SPECIFICATION

(11) **EP 3 474 672 B1**
(45) Date of publication and mention of the grant of the patent: **09.12.2026**
(21) Application number: 17733466.1
(22) Date of filing: 28.06.2017
(51) Int. Cl.: A23C 9/00, A23C 9/154, A23J 1/20, A23J 3/08

(54) **PROCESS OF MAKING EVAPORATED MILK WITH IMPROVED MOUTH FEEL**
VERFAHREN ZUR HERSTELLUNG VON KONDENSMILCH MIT VERBESSERTEM MUNDGEFÜHL
PROCÉDÉ DE PRODUCTION DE LAIT ÉVAPORÉS AVEC UNE SENSATION BUCCALE AMÉLIORÉE

(30) Priority: 28.06.2016 EP 16176753
(43) Date of publication of application: 01.05.2019
(73) Proprietor: Société des Produits Nestlé S.A., 1800 Vevey (CH)
(72) Inventor: DAIMER, Katharina, 3510 Freimittigen (CH); KREUSS, Markus, 3510 Freimittigen (CH); MARZORATI, Mattia, 3006 Bern (CH)
(74) Representative: Elleby, Gudrun
(86) International application number: PCT/EP2017/065998
(87) International publication number: WO 2018/002141

(56) References cited:
- WO-A1-2015/197496
- US-A1- 2009 041 920
- US-A1- 2015 289 538
- DATABASE GNPD [online] MINTEL; 23 December 2013 (2013-12-23), ANONYMOUS: "Creamy Evaporated Milk", XP055717221, retrieved from www.gnpd.com Database accession no. 2270187
- DATABASE GNPD [online] MINTEL; 9 May 2016 (2016-05-09), ANONYMOUS: "Liquid Light Cream", XP055716108, retrieved from https://www.gnpd.com/sinatra/recordpage/3985783/ Database accession no. 3985783
- ASTRID J VASBINDER ET AL: "Casein-whey protein interactions in heated milk: the influence of pH", INTERNATIONAL DAIRY JOURNAL, vol. 13, no. 8, 1 January 2003 (2003-01-01), GB, pages 669 - 677, XP055244604, ISSN: 0958-6946, DOI: 10.1016/S0958-6946(03)00120-1
- SKELTE G. ANEMA ET AL: "Effect of pH on the Association of Denatured Whey Proteins with Casein Micelles in Heated Reconstituted Skim Milk", JOURNAL OF AGRICULTURAL AND FOOD CHEMISTRY, vol. 51, no. 6, 1 March 2003 (2003-03-01), US, pages 1640 - 1646, XP055305567, ISSN: 0021-8561, DOI: 10.1021/jf025673a
- TATERKA HEATHER ET AL: "The effect of whey protein denaturation on light backscatter and particle size of the casein micelle as a function of pH and heat-treatment temperature", INTERNATIONAL DAIRY JOURNAL, vol. 48, 10 February 2015 (2015-02-10), pages 53 - 59, XP029170279, ISSN: 0958-6946, DOI: 10.1016/J.IDAIRYJ.2015.01.017

## Description

### Field of the invention

The present invention relates to a method of producing evaporated milks comprising protein aggregates which contribute to the improvement of creaminess, mouthfeel and texture.

### Background

Mouthfeel and creaminess, as well as reduction of fat, are key drivers of liking for milk based products such as evaporated milks and products derived from evaporated milks.

Today, there is a challenge to increase the mouthfeel/creaminess of present evaporated milks, in particular to achieve such increase in mouthfeel/creaminess using all-natural formulations or ideally by acting on the product matrix itself, instead of adding ingredients to the product. This is particularly true in low and no fat products.

It is known since 1980's that a slight pH adjustment of native fresh milk prior to heat treatment results in change of aggregation behavior between casein micelles and whey proteins. F. Guyomarc'h. 2006; Formation of heat-induced protein aggregates in milk as a means to recover the whey protein fraction in cheese manufacture, and potential of heat-treating milk at alkaline pH values in order to keep its rennet coagulation properties. A review, Lait, 86, 1-20, explored the effect of pH 6.3 on the formation of heat-induced aggregates in milk.

As described in US 2009/0041920, milk protein concentrate may be prepared by insolubilisation of milk proteins. Insolubilisation is achieved by aggregation of the whey protein and/or casein, by adjusting the milk protein concentrate to a pH of from 4.1 to 5.4, or from 4.3 to 5.3, preferably the isoelectric point of the milk protein concentrate. Thereafter, the pH-adjusted milk concentrate may be heat-treated and homogenised. This process results in a cream cheese product.

A recent article [T. Ozcan, Yogurt made from milk heated at different pH values, J. Dairy Sci. 98:1-10] investigated the effects of different pH values of milk at heating on the rheological properties of yogurt gels. Tested pH values were 6.2, 6.7 and 7.2. The study concluded that heating at the natural pH (6.7) resulted in yogurt with highest gel stiffness. The rheological measurements were carried out after incubation of the milk with the yogurt starter and at a pH of 4.6, so that those results are not as such applicable to infer the effect of pH at heating on the rheological properties of evaporated milk.

US 2015/0289538 relates to a method of producing a frozen confection product with improved freeze-thaw stability. In particular, the method comprises a post-pasteurisation acidification step. Vasbinder and Kruif (International Dairy Journal 2003, 13(8):669-677) discusses the casein-whey protein interactions in heated milk and the influence of pH. Anema and Li (J. Agric. Food Chem. 2003, 51(6):1640-1646) discusses the effect of pH on the association of denatured whey proteins and casein micelles in heated reconstituted skim milk. Taterka and Castillo (International Dairy Journal 2015, 48:53-59) discusses the effect of whey protein denaturation on light backscatter and particle size of the casein micelle as a function of pH and heat-treatment temperature. This article discloses several pH and heat treatments of reconstituted skim milk.

Thickeners (hydrocolloids, starches, etc.) have been added to milk products to increase their viscosity. However this solution had several drawbacks such as unexpected texture change and flavor loss, increased length of ingredient list and also increased formulation costs.

Thus it is an object of the present invention to improve mouthfeel, texture, thickness and/or creaminess of evaporated milks, particularly with lower or no fat. It is also an object of the present invention to keep mouthfeel, texture, thickness and/or creaminess of an evaporated milk constant while reducing fat content. Furthermore it is also an object of the present invention to keep mouthfeel, texture, thickness and/or creaminess of an evaporated milk constant while reducing thickening agents and/or stabilizers, e.g. hydrocolloids or starch.

### Summary of the invention

It was surprisingly found that by adjusting the pH of an evaporated milk to a value in the range of 6.0 to 6.2, followed by a heat sterilisation treatment at a temperature above 100°C and cooling below 70°C, casein/whey protein aggregates having a volume-based mean diameter d(4,3) of 14 to 40 µm can be obtained, resulting in increased colloidal particle size and overall viscosity.

In a first exemplary aspect not forming part of the present invention, the description discloses to an evaporated milk comprising caseins and whey proteins in the ratio of 90:10 to 60:40 and having a total solids content of at least 10wt% and of less than 30wt%, based on the total weight of the evaporated milk, wherein the caseins/whey protein aggregates have a volume-based mean diameter d_{(4,3)} of 1-80µm as measured by laser diffraction.

The present invention relates to a process for the preparation of an evaporated milk according to claim 1.

### Description of the figures

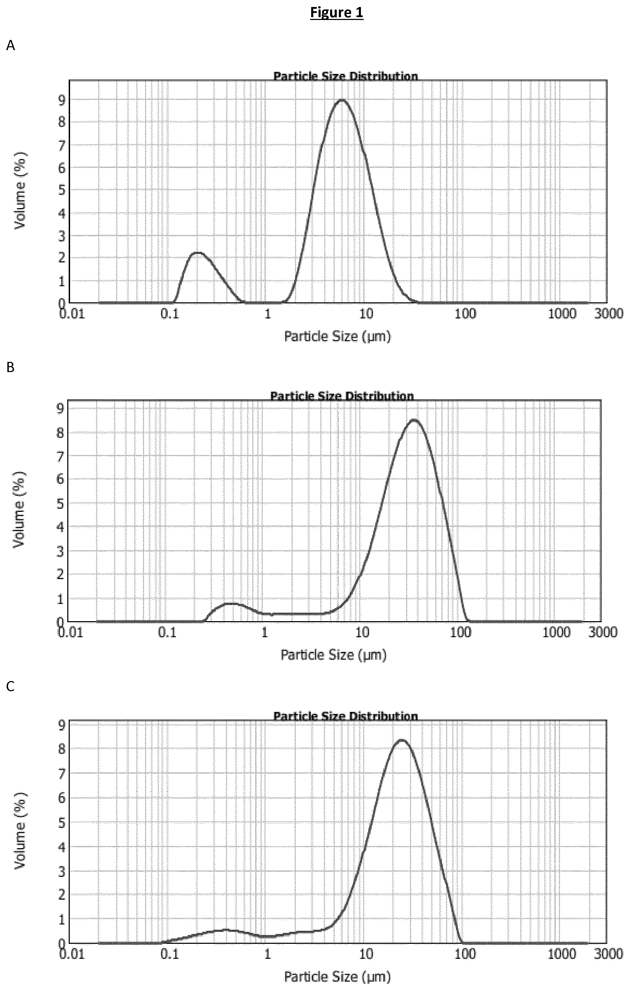

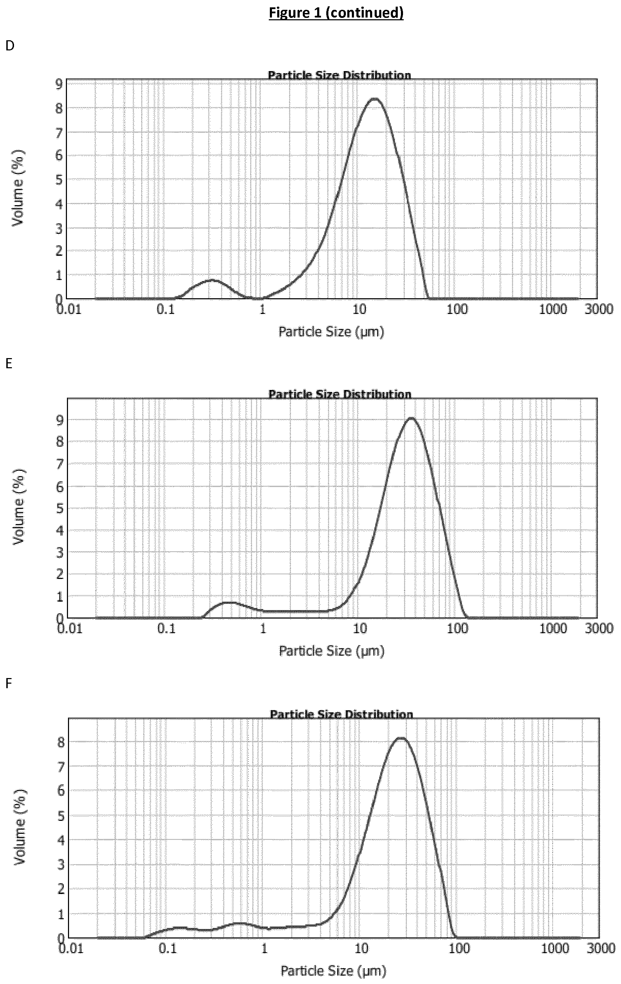

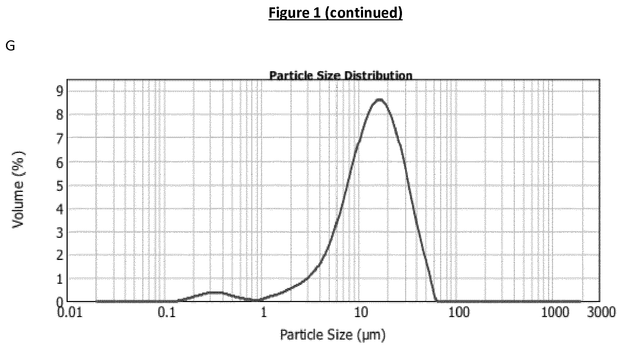

Figure 1 shows particle size distributions of full fat evaporated milks at total solids content of 25.5wt%, based on the total weight of the evaporated milk, of Samples 1 to 6 of the invention and of Reference 1 (prior art): A: Reference 1 produced with no pH adjustment and UHT processed at 145°C for 5 seconds; B: Sample 1 produced with adjustment of the pH to 6 and UHT processed at 145°C for 5 seconds; C: Sample 2 produced with adjustment of the pH to 6.1 and UHT processed at 145°C for 5 seconds; D: Sample 3 produced with adjustment of the pH to 6.2 and UHT processed at 145°C for 5 seconds; E: Sample 4 produced with adjustment of the pH to 6 and UHT processed at 150°C for 5 seconds; F: Sample 5 produced with adjustment of the pH to pH 6.1 and UHT processed at 150°C for 5 seconds; G: Sample 6 produced with adjustment of the pH to pH 6.2 and UHT processed at 150°C for 5 seconds. All Samples of the present invention have a significantly larger particles than the prior art Reference.

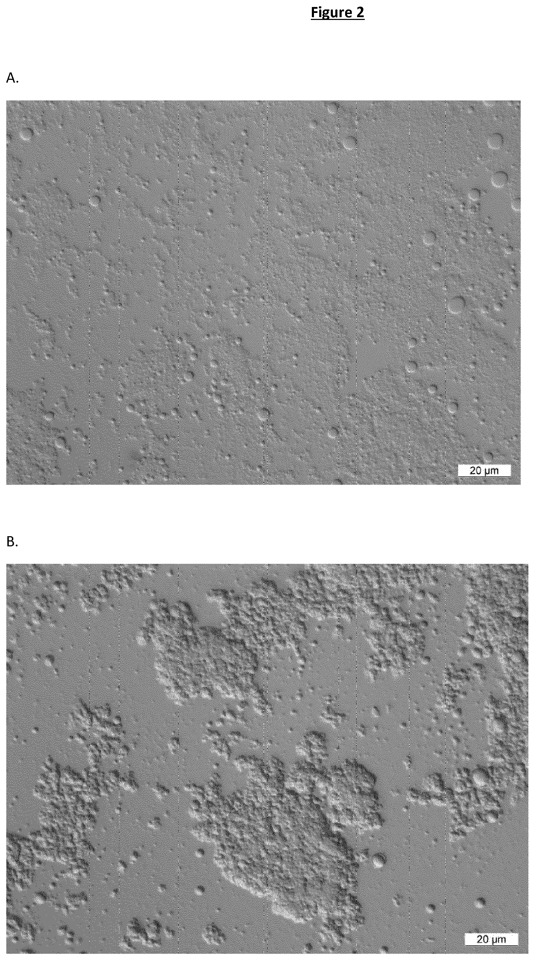

Figure 2 shows a microscopic image of the full fat evaporated milk of Sample 3 (25.5wt% total solids, produced with adjustment of the pH to 6.2 and UHT processed at 145°C for 5 seconds) in differential interference contrast (DIC) mode. Sample 3 of present invention shows controlled aggregate formation which is a microscopy signature of protein complex formation at molecular scale. Scale bar is 20 microns.

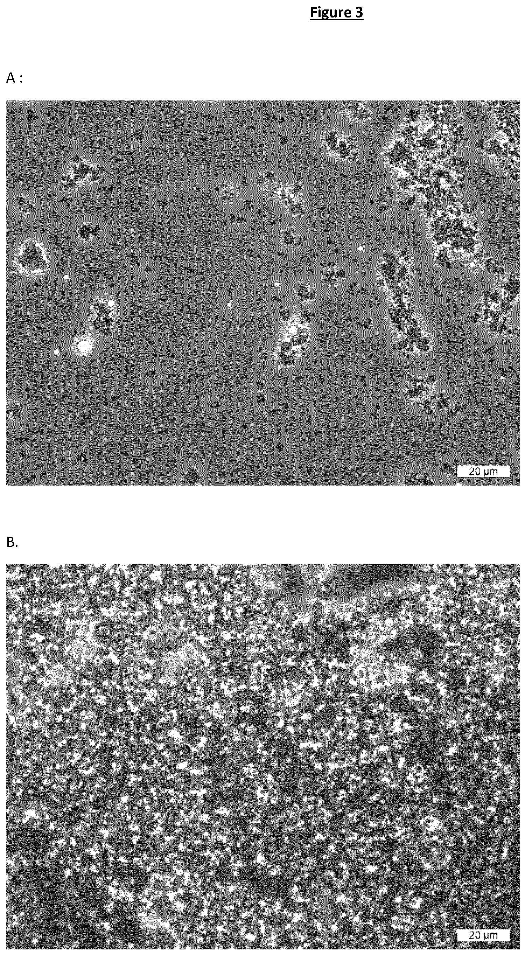

Figure 3 shows a microscopic image of the full fat evaporated milk of Sample 3 (25.5wt% total solids, produced with adjustment of the pH to 6.2 and UHT processed at 145°C for 5 seconds) in photoconductive (PC) mode. Sample 3 of present invention shows controlled aggregate formation which is a microscopy signature of protein complex formation at molecular scale. Scale bar is 20 microns.

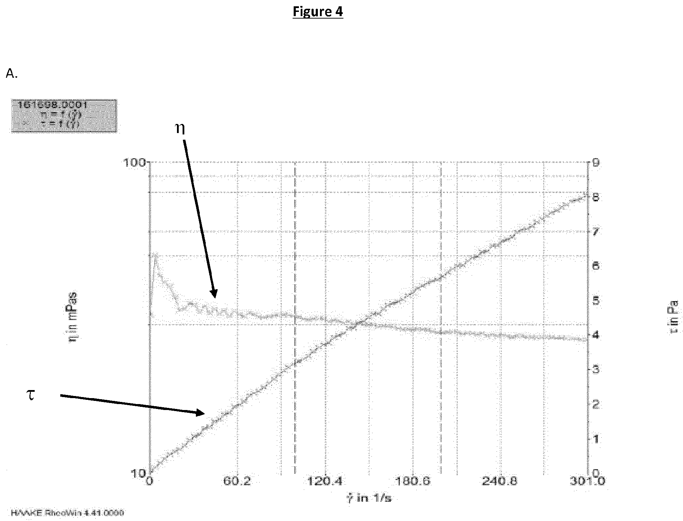

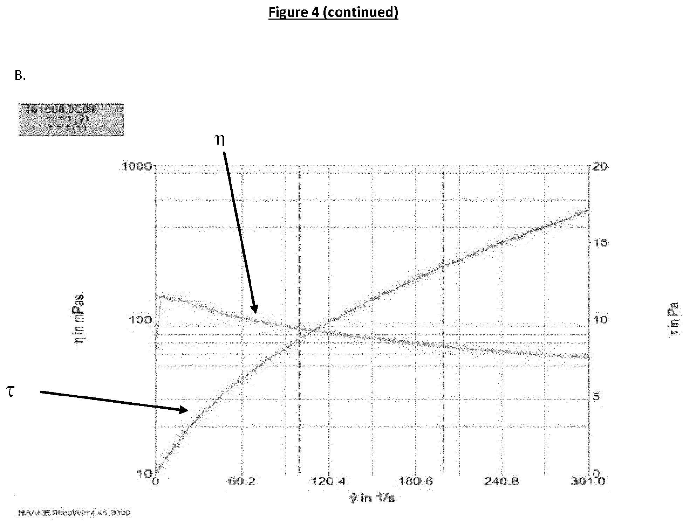

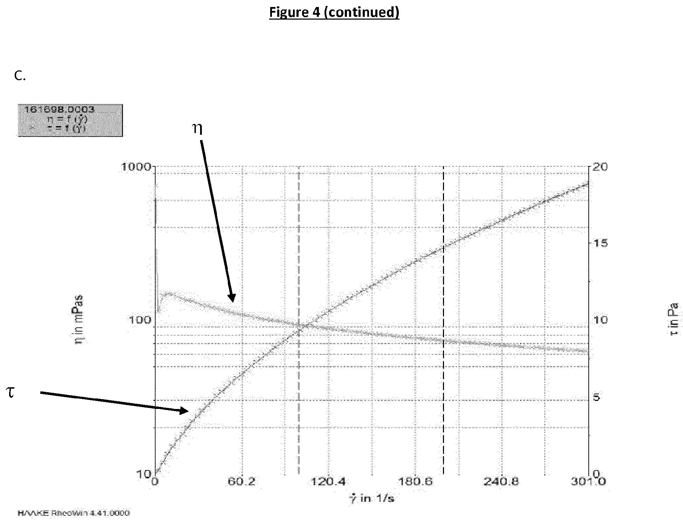

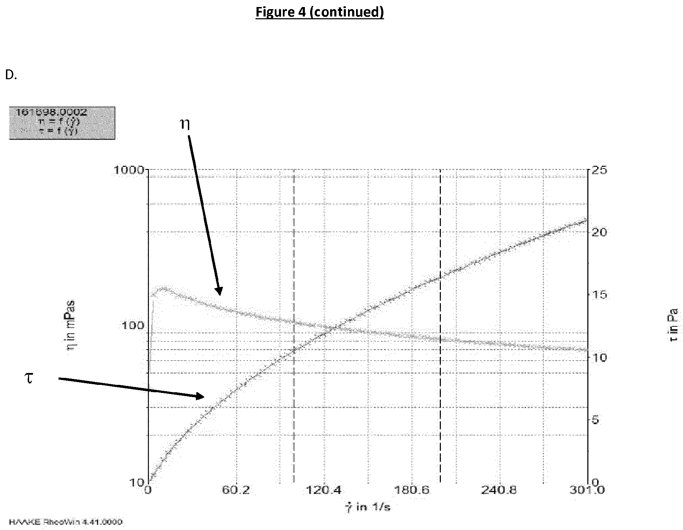

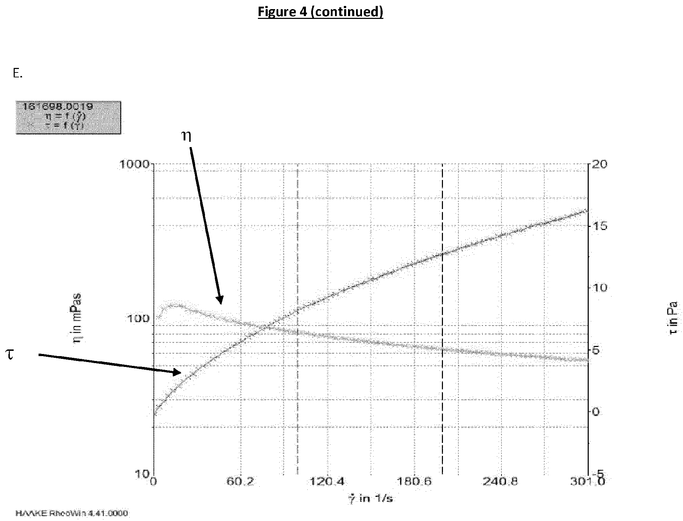

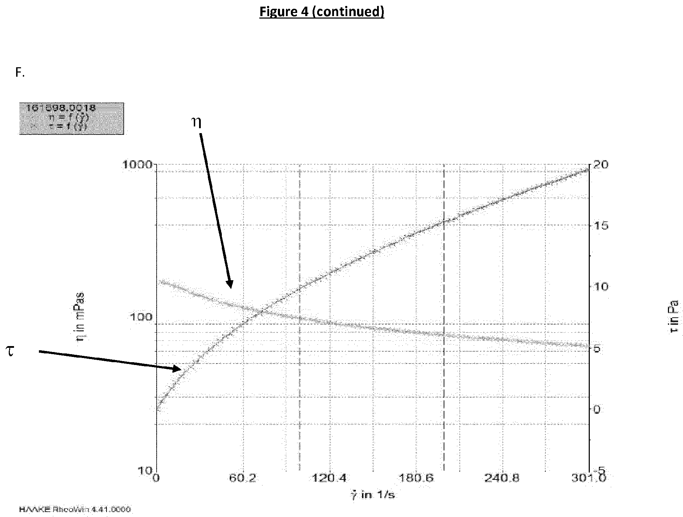

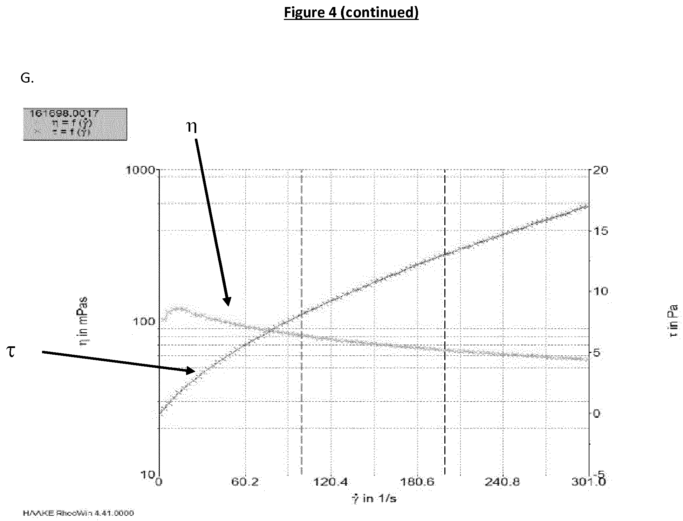

Figure 4 shows flow curves obtained on evaporated milks of Reference 1 (prior art) and Samples 1 to 6 (invention) with total solids content of 26wt%: A: Reference 1 produced with no pH adjustment and UHT processed at 145°C for 5 seconds; B: Sample 1 produced with adjustment of the pH to 6 and UHT processed at 145°C for 5 seconds; C: Sample 2 produced with adjustment of the pH to 6.1 and UHT processed at 145°C for 5 seconds; D: Sample 3 produced with adjustment of the pH to 6.2 and UHT processed at 145°C for 5 seconds; E: Sample 4 produced with adjustment of the pH to 6 and UHT processed at 150°C for 5 seconds; F: Sample 5 produced with adjustment of the pH to pH 6.1 and UHT processed at 150°C for 5 seconds; G: Sample 6 produced with adjustment of the pH to pH 6.2 and UHT processed at 150°C for 5 seconds.

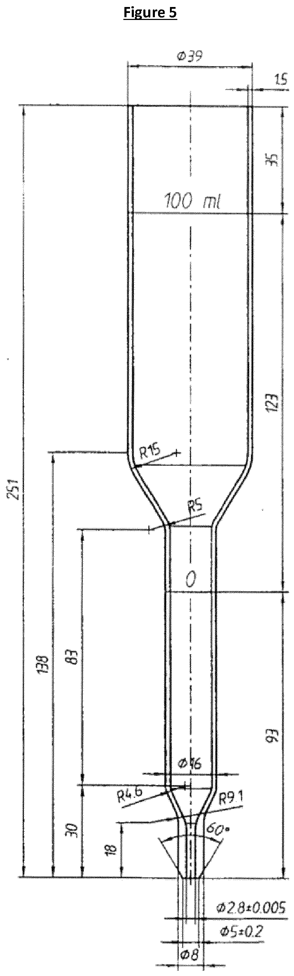

Figure 5 shows a drawing of a viscometer suitable to the measurement of the flowtime of an evaporated milk. Dimensions are indicated in millimeters.

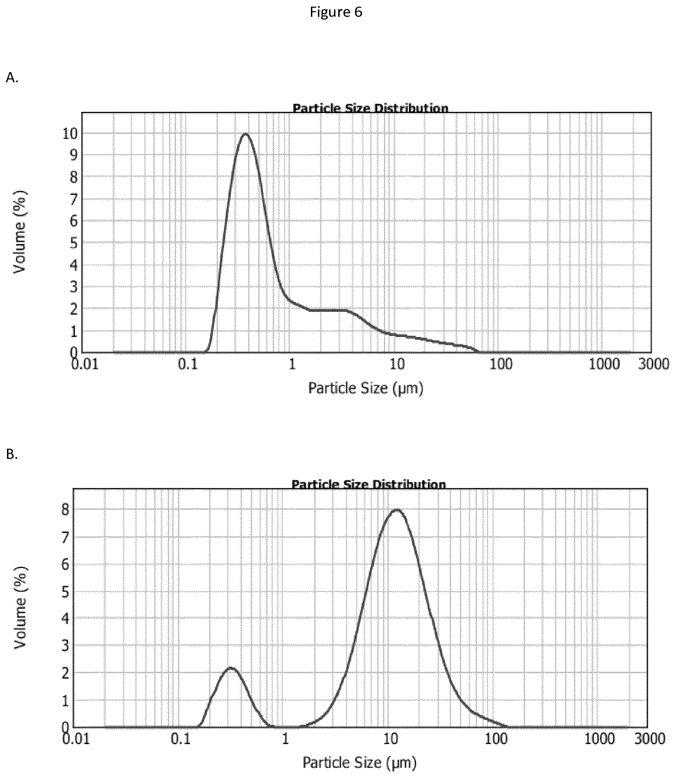

Figure 6 shows particle size distributions of full fat evaporated milks at total solids content of 25.5wt%, based on the total weight of the evaporated milk, of Samples 7 of the invention and of Reference 2 (prior art): A: Reference 2 produced with no pH adjustment and retort sterilization process; B: Sample 7 produced with adjustment of the pH to 6.4 and retort sterilization process. The sample of the present invention has significantly larger particles than the prior art Reference.

### Detailed description

### Definitions

The term "caseins/whey protein aggregates having a volume based mean diameter value d_{(4,3)}" of a particular value refers to protein network comprising casein micelles and whey proteins either present in aggregates or covalently associated and having such volume mean diameter d_{(4,3)}., as measured using laser diffraction. For example the volume mean diameter d_{(4,3)} can be measured using a Malvern Mastersizer 2000 granulometer (Malvern Instruments Ltd, UK). In a preferred embodiment, dispersion the evaporated milk is achieved in distilled or deionised water and measurements of the particle size distribution by laser diffraction using a Malvern Mastersizer 2000 granulometer (Malvern Instruments Ltd, UK). Even more preferably, measurement settings used are a refractive index of 1.46 for fat droplets and 1.33 for water at absorption of 0.01 and samples are measured at an obscuration rate of 2.0 - 2.5%. The measurement results are preferably calculated in the Malvern software based on the Mie theory.

The term "evaporated milk" refers to a milk that is concentrated above total solids content of fresh milk. Typically an evaporated milk is concentrated twice compared to fresh milk and thus has twice the total solids content and twice the fat content of fresh milk. For example commercial full fat milk has around 12.5 wt% total solids and a commercial skimmed milk typically has at least 9wt% total solids, whereas the evaporated milk according to the present invention has a total solids content of at least 10wt% and of less than 30wt%, based on the total weight of the evaporated milk. Such evaporated milk can be obtained from any kind of milk, such as full-fat milk, skimmed milk, semi-skimmed milk or high-fat milk by evaporation and the milk can originate from various mammalian species, such as for example cattle, ovine or camelids.

For the purpose of the present invention the terms "flowtime" refer to the time required for 100 ml of an evaporated milk to flow through a glass efflux viscosimeter as depicted in Figure 5, at 20°C. Such device consists of a glass cylinder with two guide marks, delimiting 100ml. The lower end is a calibrated capillary tube. Such a viscosimeter can be ordered from diverse suppliers, for example from Gerber instruments AG, Im Langhang 12, 8307 Effretikon, Switzerland.

### Evaporated milk

Disclosed herein and not forming part of the present invention is an evaporated milk comprising caseins and whey proteins in the ratio of 90:10 to 60:40 and having a total solids content of at least 10wt% and of less than 30wt%, based on the total weight of the evaporated milk, wherein the caseins/whey protein aggregates have a volume-based mean diameter value d_{(4,3)} of 1-80µm as measured by laser diffraction.

The casein and whey ratio of 90:10 to 60:40 encompasses milks with a slight modification of the casein whey content, as well as natural milk. The casein and whey ratio can be modified by adding whey or casein to natural milk. In a preferred embodiment, the evaporated milk has the natural casein and whey ratio of cow milk, which is of 80:20.

The evaporated milk has a total solids content of at least 10wt% and of less than 30 wt%. Preferably, the total solids content is of at least 11.5 and of less than 30wt%, more preferably it is of at least 20wt% and of less than 30%, most preferably, it is of at least 25wt% and of less than 30%, such as for example 25-29wt%, 25-28wt%, 25-27% or 26-27wt%.

The total milkfat content of the evaporated milk will depend on the type of milk used and of the extent of the evaporation, but will typically be of 1 to 15wt%, based on the total weight of the evaporated milk. A typical evaporated milk has at least 34wt% of milk protein, based on the total weight of the non-fat solids present in the evaporated milk.

The evaporated milk comprises casein-whey protein aggregates having a specific volume-based mean diameter d_{(4,3)} that provides improved viscosity and mouthfeel to the evaporated milk, while avoiding phase separation in the milk. It is preferred that the casein-whey protein aggregates have a volume-based mean diameter d_{(4,3)} of at least 7, 8, 10, 11, 12, 13, 14 or 15µm. In another embodiment, the volume-based mean diameter d_{(4,3)} of the casein-whey protein aggregates is of at most 75, 70, 65, 60, 55, 50, 45 or 40 µm. In another embodiment the volume-based mean diameter d_{(4,3)} of the casein-whey protein aggregates ranges from 10 to 60 µm, from 11 µm to 50 µm, from 12 to 40µm, from 14 to 40 µm, from 7 to 40 µm, from 8 to 40 µm or from 10 to 40 µm. In yet another embodiment the volume-based mean diameter d_{(4,3)} of the casein-whey protein aggregates ranges from 14 to 36 µm. Protein aggregates having a size comprised in the above mentioned ranges have the advantage of providing improved texture/mouthfeel to the evaporated milk while being stable, i.e. they do not sediment in the evaporated milk. In particular, the fat-like perception of the evaporated milk is improved by the presence of particles in the above-mentioned ranges. Controlled aggregation with particles in the above mentioned ranges is also advantageous in that it is at the fine balance between thicker texture/mouthfeel and avoidance of excessive sandiness.

Such particle size distribution is advantageously present in any kind of evaporated milk according to the invention, such as full fat milk, skim milk or semi-skim milk, with or without thickener. This particle size is responsible for providing an improved mouthfeel to the evaporated milk compared to a standard evaporated milk having the same fat and thickener content but having smaller particles. Such improvement of the mouthfeel can further be increased by additional increase in viscosity of flow time, as will be described below.

The viscosity of the evaporated milk varies depending on several aspects including the total solids content, the fat content and the presence or absence of thickeners. In particular the viscosity of an evaporated full fat milk of the invention is higher than the viscosity of skimmed or semi-skimmed evaporated milk of the invention. However, irrespective of the type of milk, the evaporated milk of the present invention has a higher viscosity than an evaporated milk of same composition that has not been subjected to the process of the present invention and thus not having casein-whey protein aggregates with a volume-based mean diameter d_{(4,3)} in the above-described ranges. For example, in the case of an evaporated full fat milk without thickener having a total solids content of about 26wt%, the viscosity of the evaporated milk of the present invention is typically of 50-140 mPas at a shear rate of 100 s⁻¹, whereas an evaporated milk of same fat and total solids content not subjected to the process of the invention would have a viscosity around 30 mPas at a shear rate of 100 s⁻¹. An evaporated skim milk without thickener having a total solids content of about 26wt%, the viscosity of the evaporated milk of the present invention is typically of 20-80 mPas at a shear rate of 100 s⁻¹, whereas an evaporated milk of same fat and total solids content not subjected to the process of the invention would have a viscosity of at most 10 mPas at a shear rate of 100 s⁻¹.

In a preferred embodiment, the evaporated milk has a viscosity of 20 to 140 mPas at a shear rate of 100 s⁻¹. The viscosity can be measured using any kind of rheometer, for example using a plate-plate system (such as for example a Haake ReheoStress 6000, optionally coupled with a temperature controller (such as for example an UMTC - TM-PE-P).

The texture of an evaporated milk can be advantageously characterized by the time that the evaporated milk requires to flow through a calibrated viscometer as depicted in Figure 5 (herein designated as "flowtime"). The flowtime varies depending on the fat and total solids content of the evaporated milk. However, at constant fat and total solids content, the flowtime of the evaporated milk of the present invention is higher than the flowtime of an evaporated milk not subjected to the process of the present invention and thus not having casein-whey protein aggregates with a volume-based mean diameter d_{(4,3)} in the above-described ranges. Preferably, a full fat milk of the present invention has a flowtime of at least 22s, preferably at least 23s, preferably at least 25s, preferably at least 28s, more preferably at least 30s. In an embodiment where the evaporated milk of the invention is an evaporated skim milk, the flowtime is preferably of at least 15s, more preferably at least 17s, even more preferably at least 18s.

The flowtime is preferably measured as follows. It is first assessed that the product is perfectly liquid. If the product contains solid insoluble particles, the sample is sifted. The sample is then placed in a bath set a 20°C and brought to this temperature. The viscometer is fixed in a vertical position. The lower end of the viscometer is sealed, for example by applying a finger on the lower end, the viscometer is filled with the sample at 20°C up to above the 100 ml guide mark. The lower end is then un-sealed. The chronometer is started when the upper surface of the sample passes the 100ml mark and stopped when this surface passes the 0 ml mark. The flowtime is measured in a viscometer as represented in Figure 5, which is for example available from Gerber instruments AG, Im Langhang 12, 8307 Effretikon, Switzerland.

### Process

The invention relates to a process for preparing an evaporated milk according to claim 1.

The evaporated milk obtained by the process of the invention is advantageously characterized by the presence of larger protein particles and an increased viscosity, the whey protein forming covalent aggregates with the casein micelles.

In step a), the temperature is advantageously set to a temperature below 25°C so as to avoid the occurrence of acid induced casein precipitation/coagulation before the heat sterilization step c). Thus the controlled protein aggregation happens under the specific conditions of the heat sterilization treatment step c). For the same reason, a heating step is also preferably avoided between the pH adjustment and the heat sterilization step. Thus, in a preferred embodiment the evaporated milk is not subjected to a heat treatment step between the pH adjustment step b) and the sterilization step c).

In step b), the pH is adjusted to a pH in the range of 6.0 to 6.2.

The pH can be adjusted using any kind of edible acid known to the person skilled in the art. Example of such acids are for example citric acid, lactic acid or phosphoric acid. The amount of acid needed to achieve the desired pH adjustment as described above can also be determined by a skilled person on the basis of his general knowledge.

The aggregation of the whey and casein proteins is achieved through a heat sterilization treatment. The temperatures of at least 100°C used in a heat sterilization treatment, which are need to achieve proper spores inactivation, proved adequate to achieve controlled aggregation in evaporated milks having a total solids content of at least 10wt% and of less than 30wt%, without forming too large aggregates that would phase separate, while providing desired textural change. Such high temperatures advantageously achieve at the same time the safety of the evaporated milk through sterilization and the agglomeration of the whey and casein proteins, thus increasing the viscosity of the evaporated milk and improving its texture and/or mouthfeel.

The heat sterilization treatment carried out in step c) can be any type of heat sterilization treatment known in the art. The person skilled in the art knows how to use such standard sterilization methods. Preferably the heat sterilization treatment is a UHT sterilization process or a retorting sterilization process, most preferably it is a UHT sterilization process. UHT sterilization process is preferred because, due to the relatively high viscosity of the product, agitation of the product improves the heat transfer in the product, whereas retorting is an in-container sterilization method, in which there is no agitation. UHT sterilization process has been identified as providing better sterilization efficiency, as well as efficient protein aggregation and viscosity/mouthfeel improvement.

Preferred UHT sterilization process is carried out at a temperature of 135 to 150°C, more preferably of 140 to 150°C, most preferably of 145 to 150°C. Preferably, the UHT sterilization process time is comprised between 2 and 30 s, longer times being typically used for lower temperatures and shorter times for higher temperatures. For example, the UHT sterilization process can be carried out at 145°C for 5 seconds or at 150°C for 5 seconds. Selection of a temperature in the specific ranges described above is advantageous in that controlled aggregation is achieved, leading to the desired size of the protein aggregates as described above, thus leading to improved texture/mouthfeel of the evaporated milk. In addition, selection of a particular temperature for the UHT sterilization process may also impact the flavor of the evaporated milk. For example the use of high temperatures may lead to more cooked flavor notes, whereas lower temperatures may lead to more fresh milk flavor. Within the above ranges, the selection of the temperature may thus also be fine-tuned based on the desired flavor, depending on the intended use of the evaporated milk.

In a particular embodiment of the invention, the pH in step b) is adjusted to a pH in the range of 6 to 6.2 and in step c) a UHT sterilization process at 145°C for 5 seconds is carried out. In another particular embodiment of the invention, the pH in step b) is adjusted to a pH in the range of 6 to 6.2 and in step c) a UHT sterilization process at 150°C for 5 seconds is carried out. In another particular embedment of the invention, the pH in step b) is adjusted to a pH in the range of 6 to 6.1 and in step c) a UHT sterilization process at 150°C for 5 seconds is carried out.

The heat sterilization treatment, preferably the UHT sterilization process may be carried out using direct steam injection (DSI) or using indirect heating. Preferably it is carried by direct stream injection.

A retorting sterilisation process may be used as the heat sterilisation treatment in the process of the invention, provided that the requirements of claim 1, including a pH of 6.0 to 6.2 and a resulting aggregate size d(4,3) of 14 to 40 µm, are met. The subsequently described retorting embodiment at pH 6.3 to 6.4 does not form part of the presently claimed invention.

In step d), the evaporated milk is cooled to a temperature below 70°C to stop the agglomeration process. Preferably, the evaporated milk is cooled down to a temperature below 60°C. The temperature can be reduced to even lower values in order to allow for filling, such as aseptic filling of the liquid evaporated milk. Thus the evaporated milk can advantageously be cooled down to below 50°C, below 40°C, below 30°C, or even 20°C or below.

In a further step, the evaporated milk may thus be filled in a container, preferably aseptically filled, for example in bricks (such as those from Tetrapack) or in plastic bottles.

Optionally, the evaporated milk may also be further processed. For example it may be diluted, concentrated or dried.

In a preferred embodiment the process described above is a process for preparing an evaporated milk comprising caseins and whey proteins in the ratio of 90:10 to 60:40 and having a total solids content of at least 10wt% and of less than 30wt%, based on the total weight of the evaporated milk, wherein the caseins/whey protein aggregates have a volume-based mean diameter d_{(4,3)} of 1-80µm as measured by laser diffraction. More preferably the process is a process for preparing an evaporated milk as defined in any of the embodiments described in the section entitled "evaporated milk".

It has surprisingly been found that texture and mouthfeel of evaporated milks are enhanced as a result of the optimized process of the invention, in which the sterilization process ensures the safety of the evaporated milk and, combined with specific acidic conditions, causes controlled protein aggregation and consequently improved texture and mouthfeel of the evaporated milk.

These protein aggregates form a network that is suspected of binding water and entrapping fat globules (in case of presence of fat) and increases mix viscosity to create a uniquely smooth, creamy texture.

In one embodiment of the present invention, the evaporated milk does not include any thickeners and/or stabilisers. Examples of such thickeners include hydrocolloids, e.g. gums, carrageenans or pectins as well as food grade starches or maltodextrins.

Exemplary product-by-process disclosure not forming part of the invention The process of the invention, as described above, leads to an evaporated milk having caseins/whey protein aggregates of unique structure providing enhanced viscosity, texture and/or mouthfeel compared to an evaporated milk of similar composition, which has not been subjected to the process of the present invention.

### Exemplary products and uses not forming part of the invention

Disclosed is also a food or beverage product comprising the evaporated milk described herein.

Such food or beverage product may be selected from a ready-to-drink beverage, a dairy culinary product, a soup or soup base, a dessert, a tea or coffee creamer or enhancer, a dairy component in coffee mixes and dairy component for use in a beverage system such as a beverage vending system.

Ready-to-drink beverages can for example be selected from ready-to-drink milks, cocoa and/or malt beverages and ready-to-drink coffee, tea or chocolate beverages comprising a dairy component. A dairy culinary product may be selected from dairy culinary savoury sauce, a baking aid and a savoury or sweet cooking aid. For its incorporation in the food or beverage product, the evaporated milk may be simply admixed with further solid or liquid ingredients or further transformed such as for example be diluted, concentrated, dried or in any other way processed.

### Examples

### Example 1: preparation of Reference 1 and Samples 1 to 6

### Preparation of Reference 1

Raw milk (protein (N x 6.38) 3.4%, fat 4.0%, total solids 12.8%) was preheated to 65°C by a plate heat exchanger and homogenized by a high pressure homogenizer (150 bars). Subsequently, the homogenized milk was concentrated by a Scheffers 2 effects falling film evaporator (from Scheffers B.V.) to approximately 26-26.5% total solids. The evaporated milk was cooled by a plate heat exchanger to 4°C and pH of homogenized liquid evaporated milk was measured to be 6.55. The evaporated milk was standardized with RO-Water to 25.5% dry matter. The evaporated milk was then subjected to a UHT sterilization process by direct steam injection (DSI) at 145°C for 5 seconds. After the heat treatment, the evaporated milk was subjected to flash cooling at 78°C and then the product was cooled down to 20°C with a plate exchanger. Finally the product was aseptically filled in plastic bottles.

### Preparation of Samples 1 to 3 made according to the process of the present invention

Raw milk (protein (N x 6.38) 3.4%, fat 4.0%, total solids 12.8%) was preheated to 65°C by a plate heat exchanger and homogenized by a high pressure homogenizer (150 bars). Subsequently, the homogenized milk was concentrated by a Scheffers 2 effects falling film evaporator (from Scheffers B.V.) to approximately 26-26.5% total solids. The evaporated milk was cooled by a plate heat exchanger to 4°C and the pH was adjusted to 6 (Sample 1), 6.1 (Sample 2) or 6.2 (Sample 3). The pH was adjusted in batch with phosphoric acid and controlled by a Mettler Toledo Seven Compact pH meter. The evaporated milk was standardized with RO-Water to 25.5% dry matter. The evaporated milk was subjected to a UHT sterilization process by direct steam injection (DSI) at 145°C for 5 seconds. After the heat treatment, the evaporated milk was subjected to flash cooling at 78°C and then the product was cooled down to 20°C with a plate exchanger. Finally the product was aseptically filled in plastic bottles.

### Preparation of Samples 4 to 6 made according to the process of the present invention

Raw milk (protein (N x 6.38) 3.4%, fat 4.0%, total solids 12.8%) was preheated to 65°C by a plate heat exchanger and homogenized by a high pressure homogenizer (150 bars). Subsequently, the homogenized milk was concentrated by a Scheffers 2 effects falling film evaporator (from Scheffers B.V.) to approximately 26-26.5% total solids. The evaporated milk was cooled by a plate heat exchanger to 4°C and the pH was adjusted to 6 (Sample 4), 6.1 (Sample 5) or 6.2 (Sample 6). The pH was adjusted in batch with phosphoric acid and controlled by a Mettler Toledo Seven Compact pH meter. The evaporated milk was standardized with RO-Water to 25.5% dry matter. The evaporated milk was subjected to a UHT sterilization process by direct steam injection (DSI) at 150°C for 5 seconds. After the heat treatment, the evaporated milk was subjected to flash cooling at 78°C and then the product was cooled down to 20°C with a plate exchanger. Finally the product was aseptically filled in plastic bottles.

### Example 2: Analysis of Reference 1 and Samples 1 to 6

### Protein aggregates particle size distribution in Reference 1 and in Samples 1 to 6

The evaporated milks of Samples 1 to 6 were compared to Reference 1 and were characterized by laser diffraction in order to determine particle size distribution (PSD = Particle Size Distribution)

The particle size of the protein aggregates, expressed in micrometers (µm) was measured using Malvern Mastersizer 2000 granulometer (laser diffraction unit, Malvern Instruments, Ltd., UK). Ultra pure and gas free water was prepared using Honeywell water pressure reducer (maximum deionised water pressure: 1 bar) and ERMA water degasser (to reduce the dissolved air in the deionised water).

Dispersion of the concentrated milk was achieved in distilled or deionised water and measurements of the particle size distribution by laser diffraction.

Measurement settings used are a refractive index of 1.46 for fat droplets and 1.33 for water at absorption of 0.01. All samples were measured at an obscuration rate of 2.0 - 2.5%.

The measurement results are calculated in the Malvern software based on the Mie theory (Table 1).

**Table 1: Volume-based mean diameter d_{(4,3)} determined by laser granulometry for Samples 1 to 6 and Reference 1**

| **Sample #** | **d_{(4,3)} (µm)** |
|---|---|
| Reference 1 | 6.5 |
| Sample 1 | 35.4 |
| Sample 2 | 25.6 |
| Sample 3 | 15.1 |
| Sample 4 | 36.3 |
| Sample 5 | 26 |
| Sample 6 | 17.2 |

The PSD profiles of Samples 1 to 16 and of Reference 1 are provided in Figure 1:
- Figure 1A: Reference 1
- Figure 1B: Sample 1
- Figure 1C: Sample 2
- Figure 1D: Sample 3
- Figure 1E: Sample 4
- Figure 1F: Sample 5
- Figure 1G: Sample 6

### Microstructure of the evaporated milks of Sample 3 and of Reference 1

The microstructure of the systems was investigated directly in liquid evaporated milks using light microscopy.

For investigation of liquid samples, a Leica DMR light microscope coupled with a Leica DFC 495 camera was used. The systems were observed using the differential interference contrast (DIC) mode. An aliquot of 500 microliters of the sample (Sample 3 and Reference 1) was deposited on a glass slide and covered with a clover slide before observation under the microscope. A picture was taken, which is provided in Figure 2:
- Figure 2A: Reference 1
- Figure 2B: Sample 3

The same procedure was followed to assess the evaporated milk structure using microscopy in PC mode. Pictures were taken, which are provided in Figure 3:
- Figure 3A: Reference 1
- Figure 3B: Sample 3

In both modes, large protein aggregates are visible on pictures or Sample 3, whereas they are absent from Reference 1. Such aggregates appear as the structural signature of the evaporated milk of the present invention. They are responsible for a change of perception of the product texture by the consumer, and namely for a significant mouthfeel improvement.

### Flow behavior of Samples 1 to 6 and of Reference 1

Samples 1 to 6 and Reference 1 were characterized for their flow using a Haake RheoStress 6000 rheometer coupled with temperature controller UMTC - TM-PE-P regulating to 20+/-0.1°C. The measuring geometry was a plate-plate system with a 60 mm diameter and a measuring gap of 1 mm.

The flow curve was obtained by applying a controlled shear stress to a 3 mL sample in order to cover a shear rate range between 0 and 300 1/s (controlled rate linear increase) in 180 seconds.

The graphs are provided in Figure 4:
- Figure 4A: Reference 1
- Figure 4B: Sample 1
- Figure 4C: Sample 2
- Figure 4D: Sample 3
- Figure 4E: Sample 4
- Figure 4F: Sample 5
- Figure 4G: Sample 6

The shear viscosity of Samples 1 to 6 and of Reference 1 at 25°C and at a shear rate of 100 s⁻¹ is provided in Table 2 below. As can be seen from those results, the viscosity is significantly improved in the Samples 1 to 6 of the invention than in the evaporated milk of Reference 1.

The flow time of Reference 1 and of Samples 1 to 6 was measured. The evaporated milks of Reference 1 and of Samples 1 to 6 were sifted to eliminate any solid particle. The sample was then placed in a bath set a 20°C and brought to this temperature. A glass viscometer as represented in Figure 5 (origin Gerber instruments AG, Im Langhang 12, 8307 Effretikon, Switzerland) was fixed in a vertical position. The lower end of the viscometer was then sealed by applying a finger on the lower end and the viscometer was filled with the evaporated milk at 20°C up to two centimeters above the 100 ml guide mark. The lower end was then un-sealed by removing the finger. The chronometer was started when the upper surface of the evaporated milk passed the 100 ml mark and stopped when this surface passed the 0 ml mark. The results are presented in Table 2 below.

**Table 2: Rheological properties of Samples 1 to 6 and of Reference 1.**

| **Sample** | **Shear viscosity [mPa.s]** | **Flowtime [s]** |
|---|---|---|
| Reference 1 | 32 | 20.3 |
| Sample 1 | 87.2 | 37.9 |
| Sample 2 | 93.1 | 38.3 |
| Sample 3 | 105 | 36.6 |
| Sample 4 | 81.6 | 39.5 |
| Sample 5 | 98.2 | 32.9 |
| Sample 6 | 81.1 | 32.5 |

This data shows that the viscosity is increased for the evaporated milk of the present invention (Samples 1 to 6) compared to the standard evaporated milk of the Reference 1. The evaporated milk of the invention also has a significantly higher flowtime, thus indicating a significant change in texture, which is associated with an improved mouthfeel.

### Example 3: Preparation of Reference 2 and Sample 7

### Preparation of Reference 1

Raw milk (protein (N x 6.38) 3.4%, fat 4.0%, total solids 12.8%) was preheated to 64°C by a plate heat exchanger, homogenized by a high pressure homogenizer (150 bars) and heat treated by direct steam injection at 120°C for 120s. Subsequently, the homogenized milk was concentrated by a Scheffers 2 effects falling film evaporator (from Scheffers B.V.) to approximately 25% total solids. The evaporated milk was then pre-heated to 60°C, homogenized at 250bar, cooled by a plate heat exchanger to 5°C and the pH of the homogenized liquid evaporated milk was measured to be 6.55. The evaporated milk was standardized with RO-Water to 25.5% dry matter and filled in cans. The evaporated milk was then subjected to a retorting process at 120°C for 40 minutes. After the heat treatment, the evaporated milk was subjected to flash cooling at 78°C and then the product was cooled down to 5°C.

### Preparation of Sample 7 (comparative or exemplary sample not forming part of the presently claimed invention)

Raw milk (protein (N x 6.38) 3.4%, fat 4.0%, total solids 12.8%) was preheated to 64°C by a plate heat exchanger, homogenized by a high pressure homogenizer (150 bars) and heat treated by direct steam injection at 120°C for 120s. Subsequently, the homogenized milk was concentrated by a Scheffers 2 effects falling film evaporator (from Scheffers B.V.) to approximately 25% total solids. The evaporated milk was then pre-heated to 60°C, homogenized at 250bar, cooled by a plate heat exchanger to 5°C. The evaporated milk was cooled by a plate heat exchanger to 4°C and the pH was adjusted to 6.4. The pH was adjusted in batch with phosphoric acid and controlled by a Mettler Toledo Seven Compact pH meter. The evaporated milk was standardized with RO-Water to 25.5% dry matter and filled in cans. The evaporated milk was then subjected to a retorting process at 120°C for 40 minutes. After the heat treatment, the evaporated milk was subjected to flash cooling at 78°C and then the product was cooled down to 5°C.

### Example 4: Analysis of Reference 2 and Sample 7

### Protein aggregates particle size distribution in Reference 2 and in Samples 7

The evaporated milk of Sample 7 was compared to Reference 2 and was characterized by laser diffraction in order to determine particle size distribution (PSD = Particle Size Distribution)

The particle size of the protein aggregates, expressed in micrometers (µm) was measured using Malvern Mastersizer 2000 granulometer (laser diffraction unit, Malvern Instruments, Ltd., UK). Ultra pure and gas free water was prepared using Honeywell water pressure reducer (maximum deionised water pressure: 1 bar) and ERMA water degasser (to reduce the dissolved air in the deionised water).

Dispersion of the concentrated milk was achieved in distilled or deionised water and measurements of the particle size distribution by laser diffraction.

Measurement settings used are a refractive index of 1.46 for fat droplets and 1.33 for water at absorption of 0.01. All samples were measured at an obscuration rate of 2.0 - 2.5%.

The measurement results are calculated in the Malvern software based on the Mie theory (Table 3).

**Table 3: Volume-based mean diameter d_{(4,3)} determined by laser granulometry for Sample 7 and Reference 2**

| **Sample #** | **d_{(4,3)} (µm)** |
|---|---|
| Reference 2 | 2.4 |
| Sample 7 | 14.1 |

The PSD profiles of Sample 7 and of Reference 2 are provided in Figure 6:
- Figure 6A: Reference 2
- Figure 6B: Sample 7

### Flow behavior of Sample 7 and of Reference 2

Sample 7 and Reference 2 were characterized for their flow using a Haake RheoStress 6000 rheometer coupled with temperature controller UMTC - TM-PE-P regulating to 20+/-0.1°C. The measuring geometry was a plate-plate system with a 60 mm diameter and a measuring gap of 1 mm.

The shear viscosity of Sample 7 and of Reference 2 at 25°C and at a shear rate of 100 s⁻¹ is provided in Table 4 below. As can be seen from those results, the viscosity is significantly improved in the Sample 7 of the invention than in the evaporated milk of Reference 2.

The flow time of Reference 2 and of Sample 7 was measured. The evaporated milks of Reference 1 and of Sample 7 were sifted to eliminate any solid particle. The sample was then placed in a bath set a 20°C and brought to this temperature. A glass viscometer as represented in Figure 5 (origin Gerber instruments AG, Im Langhang 12, 8307 Effretikon, Switzerland) was fixed in a vertical position. The lower end of the viscometer was then sealed by applying a finger on the lower end and the viscometer was filled with the evaporated milk at 20°C up to two centimeters above the 100 ml guide mark. The lower end was then un-sealed by removing the finger. The chronometer was started when the upper surface of the evaporated milk passed the 100 ml mark and stopped when this surface passed the 0 ml mark. The results are presented in Table 4 below.

**Table 4: Rheological properties of Sample 7 and of Reference 2.**

| **Sample** | **Shear viscosity [mPa.s]** | **Flowtime [s]** |
|---|---|---|
| Reference 2 | 11 | 15.8 |
| Sample 7 | 53.6 | 23.7 |

This data shows that the viscosity is increased for the evaporated milk of the present invention compared to the standard evaporated milk of the Reference 2. The evaporated milk of the invention also has a significantly higher flowtime, thus indicating a significant change in texture, which is associated with an improved mouthfeel.

## Claims

1. A process for preparing an evaporated milk having caseins/whey aggregates of a volume-based mean diameter d(4,3) of 14-40µm as measured by laser diffraction with a refractive index of 1.46 for fat droplets and 1.33 for water at absorption of 0.01 and an obscuration rate of 2.0 - 2.5% comprising the steps of:
a) providing a liquid evaporated milk at a temperature below 25°C, said evaporated milk comprising caseins and whey proteins in the ratio of 90:10 to 60:40 and having a total solids content of at least 10wt% and of less than 30wt%, based on the total weight of the evaporated milk;
b) adjusting pH of the evaporated milk provided in step a) in the range of 6.0 to 6.2;
c) subjecting the evaporated milk obtained in step b) to a heat sterilization treatment at a temperature above 100°C;
d) cooling the evaporated milk obtained in step c) below 70° C.

2. The process according to claim 1, wherein the heat sterilization treatment is a UHT sterilization process or a retorting sterilization process.

3. The process according to claim 2, wherein the heat sterilization treatment is a UHT sterilization process.

4. The process according to claim 3, wherein the UHT sterilization process is carried out at a temperature of 135 to 150°C and wherein the UHT sterilization process time is of 2 to 30s.

5. The process according to any one of claims 1 to 4, wherein the evaporated milk is not subjected to a heat treatment step between the pH adjustment step b) and the sterilization step c).

## Patentansprüche

1. Prozess zur Herstellung einer Kondensmilch mit Casein-/Molke-Aggregaten mit einem volumenbasierten mittleren Durchmesser d(4,3) von 14 bis 40 µm, gemessen mittels Laserbeugung mit einem Brechungsindex von 1,46 für Fetttröpfchen und 1,33 für Wasser bei einer Absorption von 0,01 und einer Obskurationsrate von 2,0 bis 2,5 %, umfassend die Schritte:
a) Bereitstellen einer flüssigen Kondensmilch bei einer Temperatur von unter 25 °C, wobei die Kondensmilch Caseine und Molkenproteine im Verhältnis von 90:10 bis 60:40 umfasst und einen Gesamtfeststoffgehalt von mindestens 10 Gew.-% und von weniger als 30 Gew.-% aufweist, bezogen auf das Gesamtgewicht der Kondensmilch;
b) Einstellen des pH-Werts der in Schritt a) bereitgestellten Kondensmilch in dem Bereich von 6,0 bis 6,2;
c) Unterziehen der in Schritt b) erhaltenen Kondensmilch einer Hitzesterilisationsbehandlung bei einer Temperatur von über 100 °C;
d) Kühlen der in Schritt c) erhaltenen Kondensmilch auf unter 70 °C.

2. Prozess nach Anspruch 1, wobei die Hitzesterilisationsbehandlung ein UHT-Sterilisationsprozess oder ein Retortensterilisationsprozess ist.

3. Prozess nach Anspruch 2, wobei die Hitzesterilisationsbehandlung ein UHT-Sterilisationsprozess ist.

4. Prozess nach Anspruch 3, wobei der UHT-Sterilisationsprozess bei einer Temperatur von 135 bis 150 °C durchgeführt wird und wobei die UHT-Sterilisationsprozesszeit 2 bis 30 s beträgt.

5. Prozess nach einem der Ansprüche 1 bis 4, wobei die Kondensmilch zwischen dem pH-Einstellungsschritt b) und dem Sterilisationsschritt c) keiner Hitzebehandlung unterzogen wird.

## Revendications

1. Procédé pour la préparation d'un lait concentré ayant des agrégats de caséines/lactosérum d'un diamètre moyen en volume d(4,3) de 14 à 40 µm tel que mesuré par diffraction laser avec un indice de réfraction de 1,46 pour des gouttelettes de matière grasse et de 1,33 pour de l'eau à une absorption de 0,01 et un taux d'obscurcissement de 2,0 à 2,5 % comprenant les étapes consistant à :
a) fournir un lait concentré liquide à une température inférieure à 25 °C, ledit lait concentré comprenant des caséines et des protéines de lactosérum dans le rapport de 90:10 à 60:40 et ayant une teneur en matières solides totale d'au moins 10 % en poids et de moins de 30 % en poids par rapport au poids total du lait concentré ;
b) ajuster le pH du lait concentré fourni à l'étape a) dans la plage de 6,0 à 6,2 ;
c) soumettre le lait concentré obtenu à l'étape b) à un traitement de stérilisation par chaleur à une température supérieure à 100 °C ;
d) refroidir le lait concentré obtenu à l'étape c) jusqu'à atteindre moins de 70 °C.

2. Procédé selon la revendication 1, dans lequel le traitement de stérilisation par chaleur est un procédé de stérilisation UHT ou un procédé de stérilisation en autoclave.

3. Procédé selon la revendication 2, dans lequel le traitement de stérilisation par chaleur est un procédé de stérilisation UHT.

4. Procédé selon la revendication 3, dans lequel le procédé de stérilisation UHT est effectué à une température de 135 à 150 °C et dans lequel le temps de traitement de stérilisation UHT est de 2 à 30 s.

5. Procédé selon l'une quelconque des revendications 1 à 4, dans lequel le lait concentré n'est pas soumis à une étape de traitement par chaleur entre l'étape b) d'ajustement du pH et l'étape c) de stérilisation.
